# EUROPEAN PATENT SPECIFICATION

(11) **EP 0 431 853 B1**
(45) Date of publication and mention of the grant of the patent: **02.03.1994**
(21) Application number: 90313052.4
(22) Date of filing: 30.11.1990
(51) Int. Cl.: B60C 11/12, B60C 11/11

(54) **Pneumatic tyre**
Luftreifen
Bandage pneumatique

(30) Priority: 04.12.1989 JP 315016/89
(43) Date of publication of application: 12.06.1991
(73) Proprietor: SUMITOMO RUBBER INDUSTRIES LIMITED, Kobe-shi Hyogo-ken (JP)
(72) Inventor: Ochiai, Kiyoshi, Kobe-shi, Hyogo-ken (JP)
(74) Representative: Stewart, Charles Geoffrey

(56) References cited:
- CH-A- 566 877
- FR-A- 2 476 550
- US-A- 4 055 209

## Description

The present invention relates to a pneumatic tyre having an improved snow performance.

Recently, the use of studless tyres for snow has been encouraged by legislation which seeks to regulate the dust pollution caused by the use of spiked tyre. Such studless tyres generally have block type tread patterns, and the blocks are provided with axially extending sipes. A tyre having central blocks provided with circumferentially extending sipes and shoulder blocks provided with axially extending sipes is known from US-A-4055209, which also shows the features of the first part of claim 1. A ribbed tyre wherein both shoulder portions have sipes of depth 20 to 120% of the depth of the deepest circumferential groove is known from EP-B-282252. By these means the traction and braking performance on snowy and icy roads have been improved. However the following problems remain unsolved:
1. lateral skidding caused by centrifugal force during cornering;
2. unsteady handling when the tyre runs in to or out of a rut;
3. unexpected lateral movement of the vehicle when braked or started.

It is, therefore, an object of the present invention to provide a studless pneumatic tyre improved in lateral-skid performance and longitudinal-skid performance to solve the above-mentioned problems.

According to one aspect of the present invention, a pneumatic tyre has a tread provided with two circumferentially extending grooves and axially extending grooves so as to divide the tread into central blocks located between said circumferential grooves and shoulder blocks located between said circumferential grooves and the tread edges, each of said shoulder blocks provided with axially extending sipes, each of said central blocks provided with circumferentially extending sipes, characterised in that each of said circumferentially extending sipes in each said central block is extended from one of said axially extending grooves to the circumferentially adjacent axially extending groove across the central block so as to have ends opened at the block side face, each of said axially extending sipes in each said shoulder block is extended from one of said two circumferentially extending grooves toward the adjacent tread edge across the shoulder block so as to have ends opened at the block side face, said axially extending sipes having a depth of not less than 30% of the depth of said circumferential grooves, and said circumferentially extending sipe having a depth of not less than 30% of the depth of said circumferential grooves.

Preferably the axial sipes have zero width being made by cutting rather than by moulding. Also the circumferential sipes have a width of less than lmm or more preferably they too have zero width.

The axial sipes are preferably straight and the circumferential sipes may be straight or cranked.

An embodiment of the present invention will now be described in detail with reference to the accompanying drawings, in which:

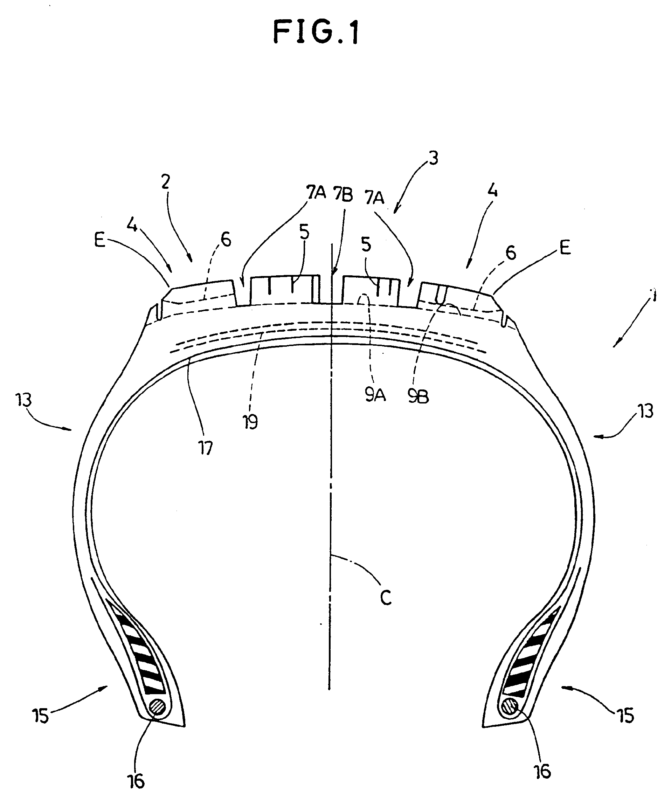

Figure 1 is a sectional view showing an embodiment of the present invention;
Figure 2 is a developed plan view showing the tread pattern thereof;
Figures 3 and 4 are sectional views taken along the line X-X and line Y-Y thereof respectively;
Figures 5(a) and 5(b) are sectional views showing the operation of the axial sipes;
Figures 8 and 9 are graphs showing results of anti-skid performance tests; and
Figure 10 is a graph showing results of tests for heel and toe wear resistance.

In the Figures, a pneumatic tyre 1 according to the present invention has a pair of axially spaced bead portions 15, a tread portion 9, and a pair of sidewall portions 13 extending from the tread edges to the bead portions.

The tyre also comprises a pair of bead core 16 disposed one in each bead portion, a carcass 17 composed of at least one ply of cords extending between the bead portions and turned up at each edge around the bead cores , a rubber tread 9 disposed radially outside the crown of the carcass 17 defining the above-mentioned tread portion 2, and a belt 19 disposed radially outside the carcass 17 and inside the tread 2.

The cords of the carcass 17 are arranged at 30 to 90 degrees with respect to the tyre equator C, so that the carcass 17 has a radial ply construction or a semi-radial ply construction. For the carcass cords, steel cords or organic fibre cords, e.g. nylon, polyester, rayon or aromatic polyamide fibre cords can be used.

The belt 19 is composed of plural plies, in this example two plies, of parallel cords disposed radially outside the carcass. The cords in each belt ply are arranged at a small angle, e.g. 0 to 30 degrees to the tyre circumferential direction so as to cross the cords in the next ply. For the belt cords, steel cords or organic fibre cords, e.g. nylon, polyester, rayon or aromatic polyamide fibre cords can be used.

The above-mentioned tread portion 2 is provided with two circumferential grooves 7A and axial grooves 9A and 9B.

The circumferential grooves 7A are disposed one on each side of the tyre equator C and extend continuously around the tread portion in a generally straight configuration to divide the tread portion in the tyre axial direction into three circumferential parts.

The axial distance of the circumferential groove 7A measured from the tread edge E to the groove centre is in the range of 10 to 30%, more preferably 15 to 25% of the tread width between the tread edges E.

The axial grooves 9A are arranged, spaced apart at intervals in the tyre circumferential direction, parallel to each other and at a narrow angle, in this example 30 degrees with respect to the tyre axial direction.

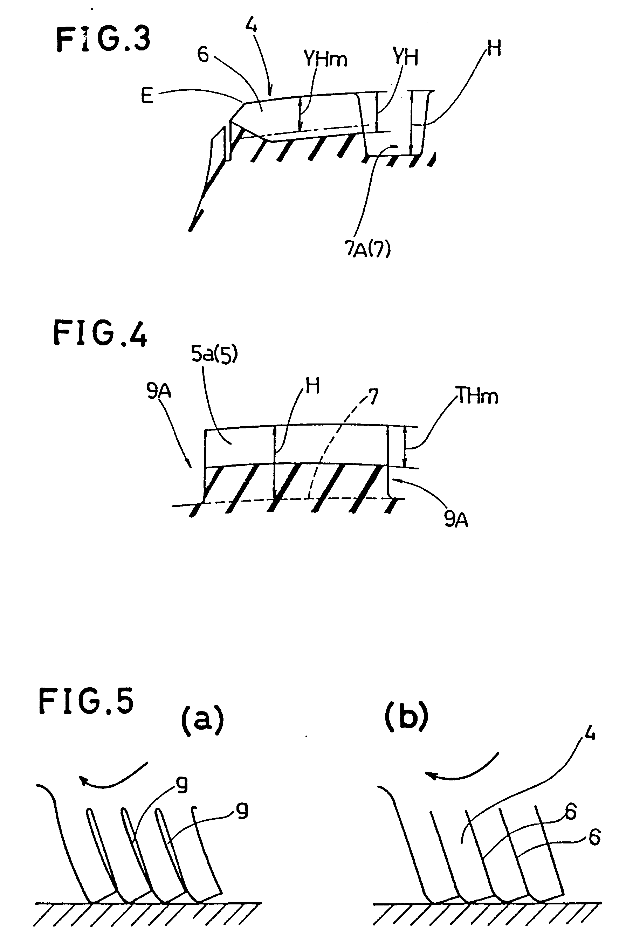

Each axial groove 9A extends from one circumferential groove 7A to the other circumferential groove 7A. Preferably, each axial groove 9A has a slightly zig-zagged or stepped configuration as shown in Figure 3, but it is possible to have a straight configuration or a wavy configuration.

The axial grooves 9B are arranged relatively spaced at the same intervals as the grooves 9A in the tyre circumferential direction and parallel to each other and at a smaller angle. Each axial groove 9B in this example extends straight from the circumferential groove 7A to the tread edge E at an angle of 20 degrees with respect to the tyre axial direction.

The circumferential pitches of the axial grooves 9B and 9A are in the range of 15 to 50%, and more preferably 25 to 40% of the tread width.

The axial width of the circumferential grooves 7A and the circumferential width of the axial grooves 9A and 9B are set in the range of 3 to 12% of the tread width, preferably 5 to 8% thereof.

Accordingly, the circumferential part between the two circumferential grooves 7A is divided into a row of central or crown blocks 3, and the circumferential parts between the circumferential grooves 7A and the tread edges E are divided into a row of shoulder blocks 4 arranged along the tread edge E.

Each of the shoulder blocks 4 is provided with axial sipes 8 extending parallel to or at a small angle to the tyre axial direction. In this example, three straight sipes are formed which extend across the whole axial width of the shoulder blocks at a small angle of 20 degrees, that is parallel to the axial grooves 9B. The axially inner and outer end of each sipe are opened at the axially inner side face of the block and the axially outer side face of the block or the surface of the tyre shoulder respectively. As a result, the anti-skid performance in the longitudinal direction of the tyre is improved. The circumferential pitches of the axial sipes in each shoulder block are in the range of 3 to 8% of the tread width.

On the other hand, in each of the crown blocks, at least one circumferential sipe 5 is formed. Each circumferential sipe 5 extends substantially parallel to the tyre circumferential direction across the whole circumferential length of its crown block, so that the ends of each sipe open at the side faces of the block toward the axial grooves 9A. As a result the anti-skid performance in the lateral direction of the tyre is improved.

Furthermore, each of the above-mentioned crown blocks 3 is sub-divided in the tyre axial direction into two smaller blocks by a circumferential groove 7B, whereby two rows of blocks are formed one on each side of the tyre equator C. In this example, the circumferential grooves 7B are inclined in the same direction so as to cross the tyre equatorial line C at a small angle, in this example 20 degrees, and further the above-mentioned smaller blocks are each provided with two circumferential sipes 5a and 5b. The sipe 5a is straight and the sipe 5b is cranked by providing a short axial part in the middle thereof.

Incidentally, the configuration of the axial grooves and the axial sipes may be modified to have two or more inclination angles, for example, the main portion can be inclined at a small angle to the tyre axial direction and an axially outer portion formed at the axially outer end of the main portion can extend parallel to the tyre axial direction.

In this embodiment, as shown in Figure 3, the depth YH of the axial sipe 6 is constant in the axially inner portion and the middle portion, but in an axially outer portion the depth YH decreases gradually towards the axially outer end. Therefore, the axial sipe is shallow at the tread edge E. However, the circumferential sipes 5 are constant in depth.

Further, the circumferential grooves 7A and 7B and the axial grooves 9A and 9B are formed to be the same depth H. The mean depth YHm of each axial sipe 6 is set to be not less than 30% of the depth H of the circumferential grooves. The mean depth THm of each circumferential sipe 5 is set to be not. less than 30% of the depth H of the circumferential grooves.

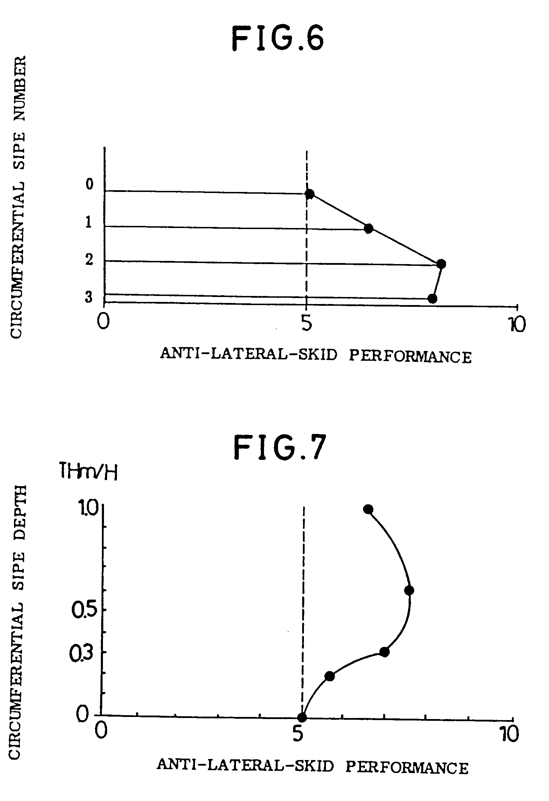

If the depth THm of the circumferential sipes is less than 30% of the circumferential groove depth H, the circumferential sipes do not prevent lateral skid, as shown in the graph in Figure 7.

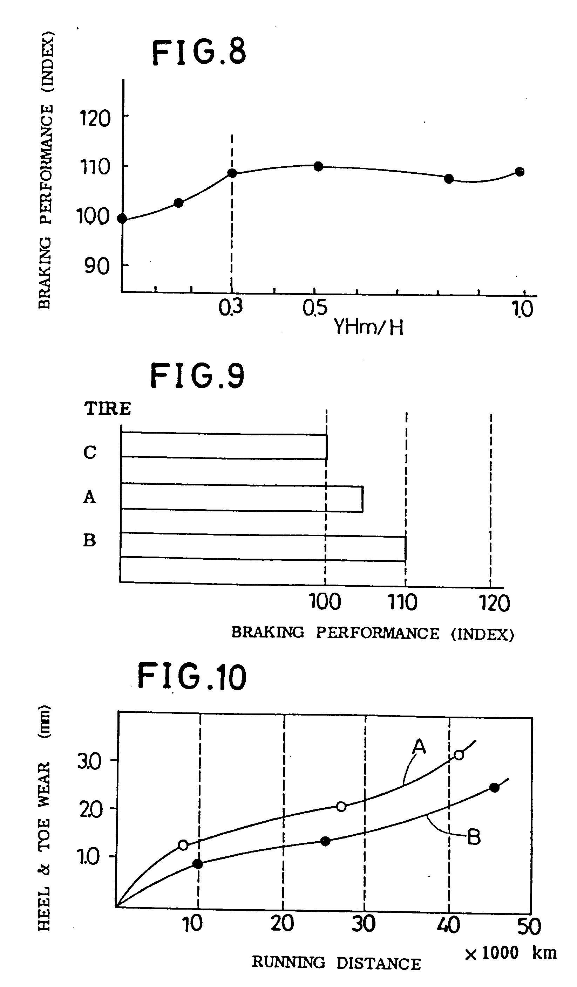

If the depth YHm of the axial sipes is less than 30% of the circumferential groove depth H, an effective improvement in anti-longitudinal-skid performance, e.g. braking performance and traction performance, is not obtained, as shown in Figure 8.

Furthermore, the width of the axial sipes 6 is substantially zero. To achieve this the axial sipes are formed by cutting the tread rubber with a knife after the tyre (or at least the tread rubber) has been vulcanised.

If the axial sipes are formed by pressing the raw tread rubber against a mould during the tyre vulcanising process, then the sipes have a certain width g as shown in Figure 5(a). As a result, the rubber elements divided by the sipes are easily and largely moved, which results in an increase in heel and toe wear. Also the block stiffness is greatly decreased, which results in loss of traction and braking performance. On the other hand, when the axial sipes are formed at zero width by cutting the vulcanised tread rubber, since the sidewalls of the axial sipes 6 can strongly contact each other shown in Figure 5(b), movements of the rubber during running is suppressed and the rigidity of the blocks is maintained. As a result, resistance to heel and toe wear and traction and braking performance are effectively improved. Therefore, the width of the axial sipes is preferably set at zero. Similarly, it is preferably that the circumferential sipes are formed at zero for similar reasons, but it is not always essential.

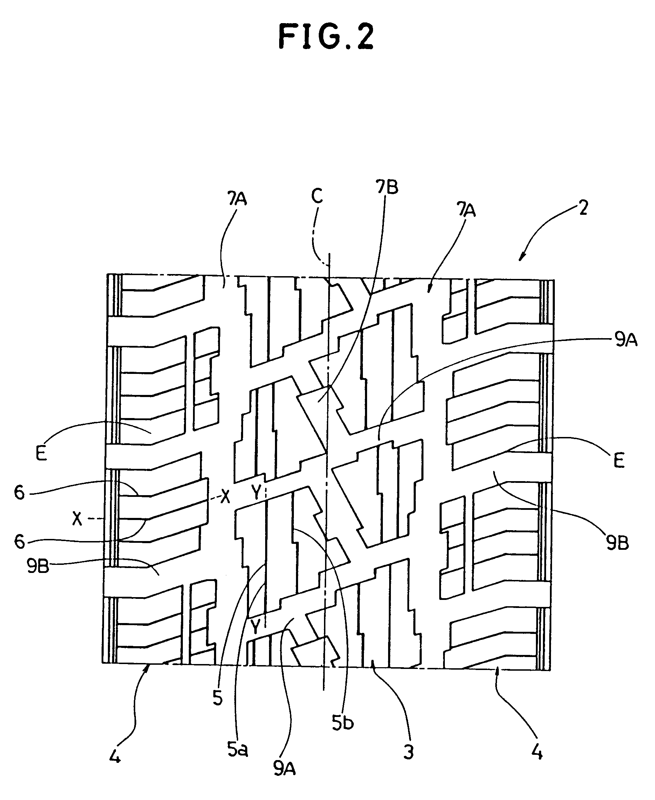

Test tyres of size 10.00R20 having the basic tread block pattern shown in Figure 2 except that the axial and circumferential sipes were omitted therefrom, were prepared, and the anti-skid performance of each test tyre was evaluated on test trucks.

Figure 6 shows the relationship between the number of the circumferential sipes and anti-lateral-skid performance. In this test, the circumferential groove depth H was 20mm, and each shoulder block was provided with axial sipes of 10mm depth. the number of axial sipes was three, and the number of circumferential sipes in each central block was varied from zero to three.

Figure 7 shows the relationship between the ratio of the circumferential sipe depth THm to the circumferential groove depth H and anti-lateral-skid performance . In this test, the circumferential groove depth H was 20mm, and each shoulder block was provided with three axial sipes of 10mm depth. Each central block was provided with two circumferential sipes, and the depth of the circumferential sipes was varied.

In the anti-lateral-skid performance tests of Figures 6 and 7, while the test vehicle was running on a snow-covered road around a circle, the performance was evaluated into ten ranks by a test driver's feel. Data or results obtained from the test tyres with no circumferential sipe were regarded as the standard rank of 5, and the higher the rank, the better the anti-lateral-skid performance.

Figure 8 shows the relationship between the ratio YHm/H of the axial sipe depth YHm to the circumferential groove depth H and braking performance. In this test, the circumferential groove depth H was 20mm, and each shoulder block was provided with two axial sipes of zero width, and the depth of the axial sipes was varied from 0 to 20mm.

Figure 9 shows the relationship between the width of the axial sipe and braking performance. In this test, the circumferential groove depth H was 20mm, and each shoulder block was provided With two axial sipes of 10mm depth. The axial sipes of tyre B were formed by cutting the tread rubber after tyre vulcanisation so that the width thereof was zero, and the axial sipes of tyre A were formed by moulding in a shaped mould for vulcanising so the width thereof was about 0.6mm, and reference tyre C had no axial sipe.

In the anti-longitudinal-skid performance tests of Figures 8 and 9, the distance to stop when all of the wheels of the test truck were running on an iced test road at 40Km/h were locked, was measured.

In Figures 8 and 9, the test results are indicated by an index based on the assumption that the braking performance of the test tyre with no axial sipe is 100. The larger the index, the better the braking performance.

Further, the above-mentioned tyres A and B were subjected to field tests for resistance to heal and toe wear. The test tyres were mounted on the front wheels of 2-D4 wheel type trucks, and the amount of wear was measured, the results of which are shown in Figure 10.

As described above, in the pneumatic tyre according to the present invention, the circumferential sipes are formed in a central region of the tread and the axial sipes are formed in lateral regions of the tread, whereby anti-skid performance in both the lateral and longitudinal directions of the tyre is effectively improved.

## Claims

1. A pneumatic tyre having a tread (3) provided with two circumferentially extending grooves (7A) and axially extending grooves (9A,9B) so as to divide the tread into central blocks (3) located between said circumferential grooves (7A) and shoulder blocks (4) located between said circumferential grooves (7A) and the tread edges (E), each of said shoulder blocks (4) provided with axially extending sipes (6), each of said central blocks (3) provided with circumferentially extending sipes (5), characterised in that each of said circumferentially extending sipes (5) in each said central block (3) is extended from one of said axially extending grooves (9A) to the circumferentially adjacent axially extending groove (9A) across the central block (3) so as to have ends opened at the block side face, each of said axially extending sipes (6) in each said shoulder block (4) is extended from one of said two circumferentially extending grooves (7A) toward the adjacent tread edge (E) across the shoulder block (4) so as to have ends opened at the block side face, said axially extending sipes (6) having a depth (YH) of not less than 30% of the depth (H) of said circumferential grooves (7A), and said circumferentially extending sipe (5) having a depth (THm) of not less than 30% of the depth (H) of said circumferential grooves (7A).

2. A pneumatic tyre according to claim 1 characterised in that axial sipes (6) have zero width.

3. A pneumatic tyre according to claim 1 or 2 characterised in that the circumferential sipes (5) have a width of less than 1mm.

4. A pneumatic tyre according to claim 1 or 2 characterised in that the circumferential sipes (5) have zero width.

5. A pneumatic tyre according to claim 1 or 2 characterised in that the axial sipes (6) have a straight configuration and are biased to the same direction.

6. A pneumatic tyre according to any of claims 1 to 5 characterised in that the circumferential sipes (5) have a straight configuration.

7. A pneumatic tyre according to any of claims 1 to 5 characterised in that each circumferential sipe (5) is provided in the middle thereof with an axially extending part to provide a cranked configuration.

8. A pneumatic tyre according to any of claims 1 to 5 characterised in that each central block (3) is provided with a circumferential sipe (5a) having a straight configuration and a circumferential sipe (5b) having a cranked configuration.

9. A pneumatic tyre according to any of claims 1 to 8 characterised in that the central blocks (3) are arranged in two rows, which rows are located one on each side of the tyre equator (C), and a groove (7B) defining the axially adjacent central blocks is biased to cross said tyre equator (C).

## Patentansprüche

1. Ein Luftreifen mit einer Lauffläche (3), die mit zwei sich in Umfangsrichtung erstreckenden Nuten (7A) und sich axial erstreckenden Nuten (9A, 9B) versehen ist, um die Lauffläche in zentrale Blocks (3), die sich zwischen den Umfangsnuten (7A) befinden, und Schulterblocks (4) zu unterteilen, die sich zwischen den Umfangsnuten (7A) und den Laufflächenrändern (E) befinden, wobei jeder der Schulterblocks (4) mit sich axial erstreckenden Lamellierungen (6) und jeder der Zentralblocks (3) mit sich in Umfangsrichtung erstreckenden Lamellierungen (5) versehen ist,
dadurch **gekennzeichnet**,
daß jede der sich in Umfangsrichtung erstreckenden Lamellierungen (5) in jedem zentralen Block (3) von einer der sich axial erstreckenden Nuten (9A) zur in Umfangsrichtung benachbarten, sich axial erstreckenden Nut (9A) über den zentralen Block (3) ausgedehnt ist, um Enden aufzuweisen, die an der Blockseitenfläche geöffnet sind, und jede der sich axial erstreckenden Lamellierungen (6) in jedem Schulterblock (4) von einer der zwei sich in Umfangsrichtung erstreckenden Nuten (7A) auf den benachbarten Laufflächenrand (E) zu über den Schulterblock (4) ausgedehnt ist, um Enden aufzuweisen, die an der Blockseitenfläche geöffnet sind, wobei die sich axial erstreckenden Lamellierungen (6) eine Tiefe (YH) von nicht weniger als 30% der Tiefe (H) der Umfangsnuten (7A) aufweisen, und die sich in Umfangsrichtung erstreckende Lamellierung (5) eine Tiefe (THm) von nicht weniger als 30% der Tiefe (H) der Umfangsnuten (7A) aufweist.

2. Ein Luftreifen nach Anspruch 1,
dadurch **gekennzeichnet**,
daß die axialen Lamellierungen (6) eine Breite von Null aufweisen.

3. Ein Luftreifen nach Anspruch 1 oder 2,
dadurch **gekennzeichnet**,
daß die Umfangslamellierungen (5) eine Breite von weniger als lmm aufweisen.

4. Ein Luftreifen nach Anspruch 1 oder 2,
dadurch **gekennzeichnet**,
daß die Umfangslamellierungen (5) eine Breite von Null aufweisen.

5. Ein Luftreifen nach Anspruch 1 oder 2,
dadurch **gekennzeichnet**,
daß die axialen Lamellierungen (6) eine gerade Konfiguration aufweisen und in die gleiche Richtung geneigt sind.

6. Ein Luftreifen nach einem der Ansprüche 1 bis 5,
dadurch **gekennzeichnet**,
daß die Umfangslamellierungen (5) eine gerade Konfiguration aufweisen.

7. Ein Luftreifen nach einem der Ansprüche 1 bis 5,
dadurch **gekennzeichnet**,
daß jede Umfangslamellierung (5) in ihrer Mitte mit einem sich axial erstreckenden Teil versehen ist, um eine gekröpfte Konfiguration zu schaffen.

8. Ein Luftreifen nach einem der Ansprüche 1 bis 5,
dadurch **gekennzeichnet**,
daß jeder zentrale Block (3) mit einer Umfangslamellierung (5a) mit einer geraden Konfiguration und mit einer Umfangslamellierung (5b) mit einer gekröpften Konfiguration versehen ist.

9. Ein Luftreifen nach einem der Ansprüche 1 bis 8,
dadurch **gekennzeichnet**,
daß die zentralen Blocks (3) in zwei Reihen angeordnet sind, von denen sich eine auf jeder Seite des Reifenäquators (C) befindet, und eine Nut (7B), welche die axial benachbarten zentralen Blocks definiert, geneigt ist, um den Reifenäquator (C) zu kreuzen.

## Revendications

1. Pneumatique ayant une bande de roulement (3) comportant deux gorges circonférentielles (7A) et des gorges (9A, 9B) disposées axialement afin qu'elles divisent la bande de roulement en blocs centraux (3) placés entre les gorges circonférentielles (7A) et en blocs d'épaulement (4) placés entre les gorges circonférentielles (7A) et les bords (E) de la bande de roulement, chacun des blocs (4) d'épaulement ayant des fentes (6) disposées axialement, chacun des blocs centraux (3) ayant des fentes (5) disposées circonférentiellement, caractérisé en ce que chacune des fentes circonférentielles (5) de chaque bloc central (3) est prolongée depuis l'une des gorges (9A) disposées axialement vers la gorge (9A) qui est disposée axialement et qui est adjacente circonférentiellement, sur le bloc central (3), afin qu'elle ait des extrémités débouchant à la face latérale du bloc, chacune des fentes (6) disposées axialement dans chaque bloc d'épaulement (4) est prolongée depuis l'une des deux gorges circonférentielles (7A) vers le bord adjacent (E) de la bande de roulement sur le bloc (4) d'épaulement afin qu'elle ait des extrémités débouchant à la face latérale du bloc, les fentes disposées axialement (6) ayant une profondeur (YH) qui n'est pas inférieure à 30 % de la profondeur (H) des gorges circonférentielles (7A), et la fente circonférentielle (5) ayant une profondeur (THm) qui n'est pas inférieure à 30 % de la profondeur (H) des gorges circonférentielles (7A).

2. Pneumatique selon la revendication 1, caractérisé en ce que les fentes axiales (6) ont une largeur nulle.

3. Pneumatique selon la revendication 1 ou 2, caractérisé en ce que les fentes circonférentielles (5) ont une largeur inférieure à 1 mm.

4. Pneumatique selon la revendication 1 ou 2, caractérisé en ce que les fentes circonférentielles (5) ont une largeur nulle.

5. Pneumatique selon la revendication 1 ou 2, caractérisé en ce que les fentes axiales (6) ont une configuration rectiligne et sont inclinées dans le même sens.

6. Pneumatique selon l'une quelconque des revendications 1 à 5, caractérisé en ce que les fentes circonférentielles (5) ont une configuration rectiligne.

7. Pneumatique selon l'une quelconque des revendications 1 à 5, caractérisé en ce que chaque fente circonférentielle (5) comporte, à son milieu, une partie disposée axialement et destinée à donner une configuration coudée.

8. Pneumatique selon l'une quelconque des revendications 1 à 5, caractérisé en ce que chaque bloc central (3) a une fente circonférentielle (5a) de configuration rectiligne et une fente circonférentielle (5b) de configuration coudée.

9. Pneumatique selon l'une quelconque des revendications 1 à 8, caractérisé en ce que les blocs centraux (3) sont disposés en deux lignes, les lignes étant placées chacune d'un côté de l'équateur (C) du pneumatique, et une gorge (7B) délimitant les blocs centraux axialement adjacents est inclinée afin qu'elle recoupe l'équateur (C) du pneumatique.
